(19)

Europäisches
Patentamt
European
Patent Office
Office européen
des brevets

(11)   **EP 2 131 697 B1**

(12)   **EUROPEAN PATENT SPECIFICATION**

(45) Date of publication and mention
of the grant of the patent:
**12.09.2012  Bulletin 2012/37**

(51) Int Cl.:
***A45D 44/00*** (2006.01)

(21) Application number: **07752454.4**

(22) Date of filing: **08.03.2007**

(86) International application number:
**PCT/US2007/005758**

(87) International publication number:
**WO 2008/108760 (12.09.2008 Gazette 2008/37)**

(54) **METHOD AND SYSTEM FOR RECOMMENDING A PRODUCT BASED UPON SKIN COLOR ESTIMATED FROM AN IMAGE**

VERFAHREN UND SYSTEM ZUM EMPFEHLEN EINES PRODUKTS AUF DER BASIS VON HAUTFARBE, DIE AUF DER GRUNDLAGE EINES BILDES GESCHÄTZT WIRD

PROCÉDÉ ET SYSTÈME POUR RECOMMANDER UN PRODUIT EN FONCTION D'UNE COULEUR DE PEAU ESTIMÉE À PARTIR D'UNE IMAGE

(84) Designated Contracting States:
**AT BE BG CH CY CZ DE DK EE ES FI FR GB GR
HU IE IS IT LI LT LU LV MC MT NL PL PT RO SE
SI SK TR**

(43) Date of publication of application:
**16.12.2009  Bulletin 2009/51**

(73) Proprietor: **Hewlett-Packard Development
Company, L.P.
Houston, TX 77070 (US)**

(72) Inventors:
• **HARVILLE, Michael
Palo Alto, CA 94306 (US)**

• **BAKER, Harlyn
Palo Alto, California 94304 (US)**
• **BHATTI, Nina
Palo Alto, California 94304 (US)**
• **SUSSTRUNK, Sabine
1007 Lausanne 1 (CH)**

(74) Representative: **Schoppe, Fritz
Schoppe, Zimmermann, Stöckeler & Zinkler
Patentanwälte
Postfach 246
82043 Pullach bei München (DE)**

(56) References cited:
**WO-A-01/04839       US-A- 5 313 267
US-A- 5 478 238       US-A1- 2006 178 904**

## Description

TECHNICAL FIELD

Embodiments of the present invention are related to product consultation of personal appearance related products.

BACKGROUND

For many customers of cosmetics or other appearance related products, making a purchase decision is difficult due to the wide variety of variables involved in the purchase decision and the wide range of products from which the customer can choose. In the field of cosmetics, there are hundreds of cosmetics products in shades which complement or contrast the user's natural complexion color. Additionally, makeup styles change seasonally, and the time of day and location where the user will be may also affect the user's decision regarding which product will be worn. Thus, a user may want to present a different appearance during the day at an office than at night at a casual event. Hence, the cosmetics may need to be adjusted based upon the user's intended use.

To help them come to a decision regarding cosmetics purchases, many customers seek advice from a trained consultant. However, many retail stores only provide display space for cosmetics, but do not provide trained personnel who help the customer come to a decision regarding cosmetics purchases. Additionally, the ambient lighting at many retail stores can distort the customer's skin coloration, thus giving the customer a false impression of how the cosmetics look on their skin. For example, many retail stores use fluorescent lighting which radiates light with a slightly bluish tint. Also, some stores use coatings on their windows which filter natural sunlight in a particular range of the visible spectrum. Thus, many customers are making a "best guess" as to whether the cosmetics product is acceptable when worn by that particular user. As a result, customers often purchase cosmetics based upon how they look in the store only to find that they do not like how the cosmetics look when they get home. Additionally, for some types of cosmetics products (e.g., lipstick), the customer is not allowed to sample the product before purchase due to health concerns.

Another disadvantage with some retail stores is that the manufacturer is not able to develop a relationship with the customer. The personnel at these stores typically have little interest in whether the customer purchases cosmetics or if the customer is satisfied with their purchase decision. Thus, these employees have little interest in representing a particular cosmetics brand in a manner which will persuade the customer to purchase that brand again. However, many manufacturers would like to provide some consultation service for customers that would result in greater customer satisfaction, which in turn would result in more sales. However, providing a consultant at each retail outlet is prohibitively expensive for manufacturers.

Alternatively, many high-end cosmetics manufacturers operate their own proprietary retail space, also known as "makeup counters," within retail stores. These makeup counters are staffed with trained representatives who can suggest current styles among which a customer may choose, and who can provide advice to the customer as to which cosmetic shades are complimentary to her skin coloration. Thus, the customer is presented with a smaller range of products from which to choose, but which are more suited for that customer based upon her needs. Additionally, the representatives can recommend other products which may complement the purchase being made by the customer and provide advice regarding current fashion trends. At very high end retail spaces, the manufacturer may provide a controlled infrastructure in which the lighting is carefully calibrated to provide the customer an accurate impression of what the cosmetics will look like when the customer leaves the store.

Unfortunately, the cosmetics products sold by manufacturers providing in-store human consultants or controlled consulting infrastructure are typically much more expensive than those sold at the retail stores which do not provide any consultation. Additionally, some customers are intimidated by the trained representatives or do not want to discuss something as personal as their appearance with a stranger. Again, the end result is that some customers who may benefit from receiving a cosmetics consultation do not receive the advice they seek.

US 2006/178904 A1 discloses an interactive system for advising at least one person, which may be configured to acquire at least one estimated or measured appearance characteristic of a person to be advised. The system may: interrogate a database, the database including information relating to appearance characteristics desired by a reference population as a function of appearance characteristics estimated or measured amongst the individuals of the reference population; and, at least by interrogating the database, as a function of the at least one estimated or measured appearance characteristic, gather information from the database relative to a desired appearance characteristic desired by at least one section of the reference population. The system may also send information to the at least one person to be advised, the information relating to the desired appearance characteristic and/or relating to at least one cosmetic for obtaining the desired appearance characteristic.

US-A-5478238 relates to a method and apparatus for determining the color of a foundation makeup comprising a device for measuring the color of the skin on an arm of a person. The skin color measured is comparing with a data base containing a palette of reference foundation colors substantially covering a representative sample of a population of given individuals. The data base contains at least the color of the skin for each individual and a reference foundation color associated with one or more of the skin colors in the data base. The foundation color associated with the skin color is determined from the data base to reproduce the skin color in the data base corresponding to the measured skin color of a person.

WO 01/04839 A discloses a method and apparatus for virtual colour makeover of a customer's face. A digital image is taken of the customer's face. Natural skin colour is determined by a differential analysis among at least two different sites along the face to identify an area without colour. The identified area without colour is then used as a basis for projecting the customer's face with the natural skin colour. Consultant's choice of preprogrammed colour palettes matching the measured natural skin colour is then projected on the facial image. A customer's personal choice such as fashion, natural or go-to-work looks can be registered for modifying the consultant's choice colour palette. The selected colour palette can then be identified as a set of colour cosmetic products, which are provided to the customer.

According to US-A-5313267 skin coloration categories are identified based upon blue and yellow undertones of the skin using a color measuring device, developing the Hunter b value, utilizing that value alone to determine which of several categories of skin coloration a subject's skin exhibits. Category selection is made by comparison of measured Hunter b with ranges of Hunter b value of skin color categories.

DISCLOSURE OF THE INVENTION

Embodiments of the present invention recite a computer implemented method for recommending a product based upon skin color estimated from an image. In one embodiment of the present invention, a skin color estimate generated from an image is accessed. The skin color estimate is then compared with a classification color. A correlation between the classification color and at least one product is accessed. Then, at least one of the products correlated with the classification color is recommended.

BRIEF DESCRIPTION OF THE DRAWINGS

The accompanying drawings, which are incorporated in and form a part of this specification, illustrate embodiments of the present invention and, together with the description, serve to explain the principles of the invention. Unless specifically noted, the drawings referred to in this description should be understood as not being drawn to scale.

FIGURE 1 is a flowchart of a method for recommending a product based upon the skin color of a subject in accordance with embodiments of the present invention.

FIGURE 2 shows an exemplary image capture system used in conjunction with embodiments of the present invention.

FIGURE 3 shows an exemplary color reference set used in embodiments of the present invention.

FIGURE 4A is a block diagram of a categorizing system for generating a skin color estimate in accordance with embodiments of the present invention.

FIGURE 4B is a block diagram of a product recommendation system for recommending a product based upon the skin color of a subject in accordance with embodiments of the present invention.

FIGURE 4C shows exemplary correlations between classification colors and products in accordance with embodiments of the present invention.

FIGURE 5 shows exemplary steps in selecting skin pixels in accordance with embodiments of the present invention.

FIGURE 6 is a block diagram of an exemplary computer system upon which embodiments of the present invention may be implemented.

MODES FOR CARRYING OUT THE INVENTION

Reference will now be made in detail to embodiments of the present invention, examples of which are illustrated in the accompanying drawings. While the present invention will be described In conjunction with the following embodiments, it will be understood that they are not intended to limit the present invention to these embodiments alone. On the contrary, the present invention is intended to cover alternatives, modifications, and equivalents which may be included within the scope of the present invention as defined by the appended claims. Furthermore, in the following detailed description of the present invention, numerous specific details are set forth in order to provide a thorough understanding of the present invention. However, embodiments of the present invention may be practiced without these specific details. In other instances, well-known methods, procedures, components, and circuits have not been described in detail so as not to unnecessarily obscure aspects of the present invention.

Notation and Nomenclature

Some portions of the detailed descriptions which follow are presented in terms of procedures, logic blocks, processing and other symbolic representations of operations on data bits within a computer memory. These descriptions and representations are the means used by those skilled in the data processing arts to most effectively convey the substance of their work to others skilled in the art. In the present application, a procedure, logic block, process, or the like, is conceived to be a self-consistent sequence of steps or instructions leading to a desired result. The steps are those requiring physical manipulations of physical quantities. Usually, although not necessarily, these quantities take the form of electrical or magnetic signals capable of being stored, transferred, combined, compared, and otherwise manipulated in a computer system.

It should be borne in mind, however, that all of these and similar terms are to be associated with the appropriate physical quantities and are merely convenient labels applied to these quantities. Unless specifically stated otherwise as apparent from the following discussions, it is appreciated that throughout the present invention, discussions utilizing terms such as "accessing," "identifying," "comparing," "generating," "selecting," "aggregating," "processing," "recommending" or the like, refer to the action and processes of a computer system, or similar electronic computing device, that manipulates and transforms data represented as physical (electronic) quantities within the computer system's registers and memories into other data similarly represented as physical quantities within the computer system memories or registers or other such information storage, transmission or display devices.

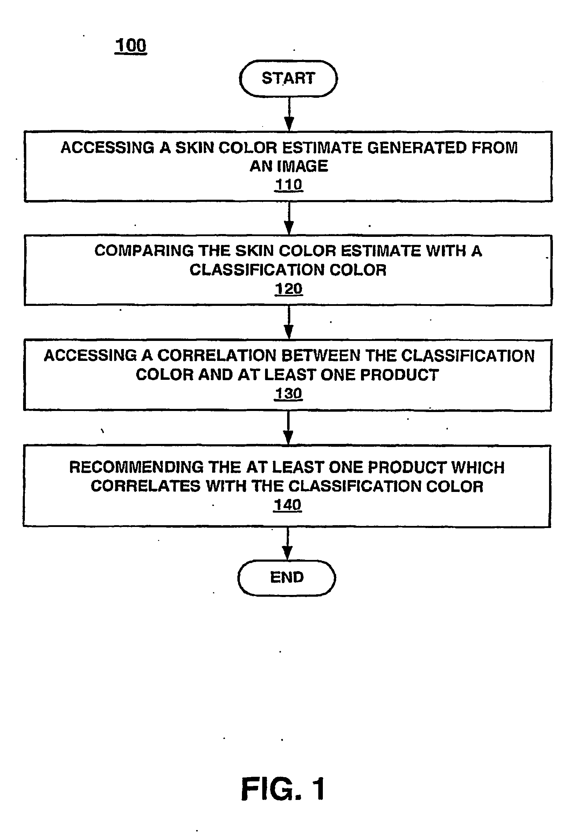

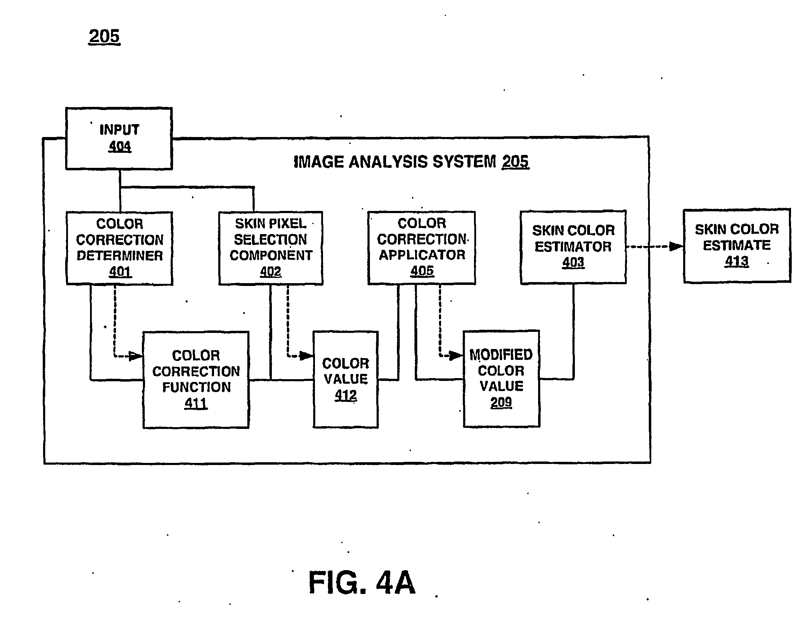

Figure 1 is a flowchart of a method 100 for recommending a product based upon skin color estimate 413 (with reference to Figure 4A) from an image in accordance with embodiments of the present invention. In step 110 of Figure 1, a skin color estimate 413 generated from an image is accessed. In embodiments of the present invention, the combined effects of the ambient lighting conditions at the location at which an image is captured as well as the imaging characteristics of the image capture system are inferred by an image analysis system. These combined effects are then substantially eliminated such that an accurate estimation of the skin color of the subject can be made based upon an analysis of the skin pixels of the subject in the image. Embodiments of the present invention access this computer generated skin color estimation so that a product recommendation can be generated based upon an accurate analysis of the subject's natural skin color.

In step 120 of Figure 1, the skin color estimate 413 is compared with a classification color. In some embodiments of the present invention, the range of human skin coloration is divided into a set of discrete classes or "bins" which are represented by corresponding classification colors. Thus, each bin defines a subset of the spectrum of human complexion colors. In embodiments of the present invention, once the skin coloration of a subject is estimated, the subject can be associated with a particular bin by matching the classification color of that bin with the subject's estimated skin color. For example, a subject with a light complexion might be associated with a bin seven, while another subject with a darker complexion might be associated with a bin nineteen.

In step 130 of Figure 1, a correlation between the classification color and at least one product is accessed. In embodiments of the present invention, each of the bins is correlated with a corresponding product. In other embodiments of the present invention, each bin may be associated with more than one product. In embodiments of the present invention, a product associated with a particular bin may comprise cosmetics, clothing, eyeglasses, jewelry, or another appearance related product.

In step 140 of Figure 1, at least one product which corresponds with the classification color is recommended. In embodiments of the present invention, a result is generated in which at least one product is recommended to a user. In embodiments of the present invention, the user may be the subject in the captured image, or an operator of an image capture system which generated the image. As an example, an e-mail message may be sent which conveys the product recommendation to the subject of the captured image.

Embodiments of the present invention are advantageous in that an accurate determination of a subject's skin color can be performed automatically and without necessitating a controlled infrastructure (e.g., calibrated and controlled ambient lighting conditions and the camera processing parameters) when capturing an image of the subject. Previously, some skin color analysis methods relied upon a dedicated room or kiosk in which the ambient lighting conditions and the camera processing parameters were carefully calibrated. This was necessary to facilitate making an accurate assessment of the skin coloration of the subject. A picture of the subject was taken and analyzed by a human consultant who then controlled a cosmetics consultation, to the subject. However, due to the expense and amount of space these facilities required, they were not generally made available to most subjects. Other systems relied upon a plurality of pictures which recorded different locations of the subject's skin or under different lighting conditions.

Additionally, embodiments of the present invention facilitate making an automatic product recommendation based on the subject's skin color. As a result, the subject can receive a product recommendation based upon his or her skin color without the need for a trained consultant's analysis. This is advantageous in, for example, retail outlets which may not have the resources for providing a dedicated makeup consultation counter. Thus, if the subject purchases cosmetics from a retailer that does not have personnel trained to perform cosmetics consultations, or does not have the space for the controlled infrastructure described above, the subject can still receive a cosmetics consultation using embodiment of the present invention. Because customers may be more likely to buy cosmetics products from a manufacturer that provides product consultation, embodiments of the present invention are advantageous for manufacturers who can suggest a whole range of related products and develop a relationship with the customer that is not possible when the customer is simply selecting from a shelf stocked with, for example, cosmetics products. Furthermore, customers who might be uncomfortable receiving a cosmetics consultation from a total stranger could receive an anonymous product consultation using embodiments of the present invention. The product consultation may even be received by the customer in their own home or other location away from the retail outlets.

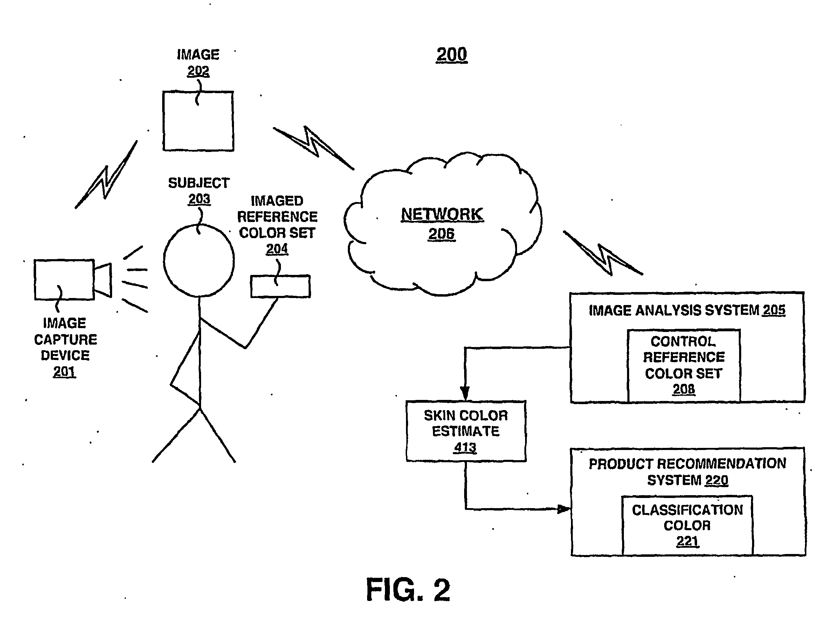

Figure 2 shows an exemplary image capture system 200 used in conjunction with embodiments of the present invention. In embodiments of the present invention, system 200 comprises an image capture device 201 for capturing an image 202 comprising a subject (e.g., 203) and a imaged reference color set 204. In embodiments of the present invention, image capture device 201 does not require a controlled infrastructure when capturing image 202. For example, image capture device 201 may be a subject's personal computer system, digital camera, or a cellular telephone capable of generating photographs (e.g., referred to herein as a "picture phone"). Thus, rather than relying upon calibrated equipment (e.g., calibrated cameras and calibrated lighting), embodiments of the present invention may utilize end subject equipment during the product consultation process. Furthermore, there is no requirement for the image to be captured in an environment in which the ambient lighting conditions are known or controlled as long as the lighting conditions are sufficient for system 200 to process the image. As a result, image 202 may even be captured in a variety of environments including, for example, outdoors, or in the home of subject 203.

Image 202 is then conveyed to an image analysis system 205 via network 206. As will be discussed in greater detail below, image analysis system 205 is for generating a skin color estimate 413 of subject 203 based upon an analysis of image 202. Typically, the quality and spectral characteristics of light falling on a given subject affect the subject's appearance to a camera and thus in the image generated by the camera. The camera itself, through physical characteristics of the design and fabrication of its sensor, and also through internal processing characteristics of the camera, introduces further alteration in the perceived skin coloration of the subject. These effects combine to make skin coloration metrics of the image highly dubious. By viewing a set of reference colors captured along with the image of the subject, image analysis system 205 may facilitate determining a transformation from the observed color space of the captured image to a reference or "true" color space that is independent of the ambient lighting conditions and image processing capabilities of the camera which captures the image.

In embodiments of the present invention, the true color space is represented by a control reference color set 208. It is appreciated that the control reference color set 208 may comprise a logical reference color set from which spectral reflectance or color signal values are accessed, rather than an actual physical entity. By comparing the characteristics of control reference color set 208 with the characteristics of the reference color set 204 captured in the image, image analysis system 205 can determine a transformation, or "color correction function," which accounts for the discrepancy between the characteristics of imaged reference color set 204 and control reference color set 208. This color correction function directly compensates for the combined effect of the ambient lighting in the room and the color transformation of the acquiring camera.

To facilitate determining this color correction function, image analysis system 205 detects and measures the observed characteristics of the imaged reference color set 204. Image analysis system 205 then determines a color correction function that brings colors of the imaged reference color set 204 optimally close to the colors of control reference color set 208 in the reference color space.

In order to analyze the image of a user to identify the user's skin coloration, a selection of image skin color regions in the captured image representative of the user's natural skin color is made by image analysis system 205. Some embodiments of the invention attempt to find these skin color regions on the face of the imaged subject. Selecting these elements of the user's face and head to sample for color values involves identifying the location and orientation of the user's face within the captured image. Furthermore, a determination of where within the face to collect appropriate skin coloration measurements is made by image analysis system 205.

Image analysis system 205 may be configured to determine which regions of a user's face (e.g., the forehead, cheeks, chin, etc.) are highly predictive of the subject's natural, overall face coloration. This ensures that coloration of the skin itself, and not freckles, blemishes, hair color, eye color, or other incorrect values, is measured. In embodiments of the present invention, techniques known to practitioners of computer vision facilitate making these determinations. For example, heads can be detected through various computer implemented "face-detection" methods and the orientation of the head can be determined through techniques such as mesh-fitting to derived control points. Samples of skin coloration can then be selected from known locations on these meshes. Alternatively, statistical analysis of skin color without mesh fitting can also be used to estimate skin coloration. Thus, image analysis system 205 does not necessarily rely upon detecting skin color in the captured image in order to determine the skin areas of the subject. However, image analysis system 205 may utilize computer implemented skin color detection methods in conjunction with the face-detection methods to further refine detecting the skin pixel areas of the captured image. These skin color detection methods use models of skin color that apply over a broad range of illuminants and cameras in order to identify probable skin areas based upon the colors displayed in the captured image.

In embodiments of the present invention, validation of the samples as being representative of the appropriate skin coloration can be performed using standard outlier rejection principles. The result is a set of skin measurements that is substantially free of defect or extraneous material and which provides a usable sampling of the subject's skin coloration. Furthermore, while the present embodiment teaches determining which regions of a user's face are representative of the subject's natural skin color, image analysis system 205 is well suited for analyzing the skin coloration of the subject's entire face, or other skin regions of the subject such the neck, arms, etc. This may also comprise excluding some areas such as the eyes, hair, teeth, shadows, etc. which are not representative of the subject's skin coloration.

After determining which regions of a user's face (e.g., the forehead, cheeks, chin, etc.) are highly predictive of the subject's overall face coloration, image analysis system 205 determines a color description of the selected skin pixels in the captured image. In one embodiment, a color description of each identified skin pixel may be determined. In other embodiments, image analysis system 205 may determine an average value of all of the selected skin pixels which have been located, a probability density function for the colors of these pixels, or other representations of an aggregation of skin pixels.

In embodiments of the present invention, the determined color correction function is applied to the color description of one or more of the selected skin pixels located in the captured image. In some embodiments of the present invention, the color transformation is applied to aggregate skin coloration statistics, such as the mean or median, obtained from pixels determined as likely to pertain to the subject. By applying the color correction function to the skin pixels within the image, the natural skin coloration of the subject is determined in the color space in which the control reference color set 208 is specified. In so doing, a modified color description of at least one skin pixel is created which compensates for the effects of ambient lighting and imaging characteristics of the image capture device at the time the image was captured. This facilitates accurately estimating the natural skin color of the subject in the image. In embodiments of the present invention, the color correction function may be applied to the entire capture image to create a modified image. Furthermore, determining the color correction function may be performed prior to, after, or substantially simultaneously with further processing and analysis steps (e.g., locating the skin pixels in the captured image).

Thus, image analysis system 205 can infer the combined effects of the ambient lighting conditions at the location at which the image is captured, as well as the imager sensitivity and image processing characteristics of the image capture system. These combined effects are then substantially eliminated such that an accurate estimation of the skin color of the subject can be made based upon an analysis of the color descriptions of the subject's skin pixels.

Using image analysis system 205 is advantageous in that a controlled infrastructure (e.g., calibrated cameras or calibrated lighting or ambient conditions) is not necessary when capturing image 202. Previously, some methods relied upon a dedicated room or kiosk in which the ambient lighting conditions and the camera processing parameters were carefully calibrated. This was necessary to facilitate making an accurate assessment of the skin coloration of the subject. A picture of the subject was taken and analyzed by a human consultant who then controlled a cosmetics consultation to the subject. However, due to the expense and amount of space these facilities required, they were not generally made available to most subjects. Other systems relied upon a plurality of pictures which recorded different locations of the subject's skin or under different lighting conditions.

Returning to Figure 2, the skin color estimate 413 generated by image analysis system 205 is then used by a product recommendation system 220 which recommends a product or products based upon the skin color of subject 203. In embodiments of the present invention, product recommendation system 220 performs a process known as "binning." As described above, binning is a process in which the spectrum of complexion colors is divided into a set of discreet groups or "bins". Thus, each bin defines a subset of the spectrum of complexion colors. In embodiments of the present invention, the skin colors of a plurality of human test subjects are measured and used by product recommendation system 220 as the range of classification colors 221. In one embodiment, the skin color of each of the test subjects comprises one of classification colors 221. In other embodiments of the present invention, each of the classification colors may comprise an aggregate skin color description (e.g. a distribution or range in color space) describing a plurality of test subjects. Alternatively, each bin may represent a list of skin color descriptions of the test subjects. However, while the present embodiment recites the use of human test subjects to develop classification colors 221, embodiments of the present invention are not limited to, this method alone. For example, in another embodiment, classification colors 221 may comprise the set of skin colors shown on imaged reference color set 204. Also, other non-skin colors (e.g., cosmetics colors, clothing colors, etc.) may be used as classification colors 221 in embodiments of the present invention.

In embodiments of the present invention, each of the bins is correlated with a corresponding product. For example, based upon the skin color of the test subjects, a first bin may be associated with a particular shade of foundation (e.g., buff beige) while a second bin may be associated with a second shade of foundation (e.g., creamy natural). In other embodiments of the present invention, each bin may be associated with more than one product. As described above, a product associated with a particular bin may comprise cosmetics, clothing, eyeglasses, jewelry, or another appearance related product.

Product recommendation system 220 compares a color description of the skin color estimate 413 generated by image analysis system 205 with the color descriptions of the bins described above to determine which bin or bins most closely matches the skin coloration of subject 203. In embodiments of the present invention, the bins may also further segment the population according to other factors such as hair color, age, and geographic location. The set of bins used by embodiments of the present invention may not include all people of a given population. Example data for the skin coloration and, optionally, other characteristics of people in each bin are used to construct one or more classifiers that, when presented with the measurements for subject 203, usually assign subject 203 to a bin or bins whose members closely match that of subject 203.

In embodiments of the present invention, the bin sizes may not be uniform. In other words, some bins may define a larger portion of the spectrum of complexion colors than other bins. For example, subjects with lighter complexions typically require , a greater degree of granularity than subjects with darker complexions because they are trying to conceal blemishes or sun damage to their skin which are more apparent on light complexions. Conversely, subjects with darker complexions tend to want to even their skin tone rather than conceal blemishes. As a result, fewer bins have been found to be sufficient for subjects with darker complexions.

Embodiments of the present invention may use different types of color descriptions to construct the bins. For example, the bins may be constructed using, for each user, a description of a single point in some color space (e.g., hue-saturation-value (HSV)) that is taken to represent the overall skin coloration of subject 203. In other embodiments, this single point may be supplemented with additional points describing hair, lip, or eye color. In other embodiments, the single point may be replaced with multiple points corresponding to skin coloration at important facial or body locations (e.g., cheek, forehead, or neck). In some embodiments, the measurement may comprise an aggregate color description of a color range or distribution describing the user's skin coloration. In other embodiments, measurement data may include age, geographic location, and other non-appearance related data of subject 203.

As will be discussed in greater detail below, product recommendation system 220 may use any of a number of different types of classifiers to map the skin color estimate 413 of subject 203 to one or more of the bins. Once the classifiers assign a person to a bin or bins based upon that user's skin coloration measurements and, optionally, other data, skin product recommendations can be made that are well suited to people in that bin(s). The different bins are typically associated with different skin product recommendations that are stored in, for example, a product database. This may be accomplished by using different recommendation algorithms for each class, different recommendation templates, or other means which allow product recommendation system 220 to automatically produce product recommendations typically provided by, for example, a makeup consultant.

Thus, product recommendation system 220 uses the skin color estimate 413 to map subject 203 to a particular bin or plurality of bins based upon the coloration of the subject. Because there is a mapping between each bin and a range of personal appearance related products which are considered suitable for a person having that skin coloration, embodiments of the present invention can automatically generate a recommendation for subject 203 of, for example, makeup products or other appearance related products which are considered suitable for that user.

In embodiments of the present invention, subject 203 can identify additional parameters using, for example, a web interface. These parameters can be used by product recommendation system 220 to further identify the product(s) in which the user is interested. For example, users can indicate that they are interested in clothing, hair coloring, makeup, etc. The users may further indicate specific product groups in which they are interested such as eye makeup, foundation, lipstick, etc. Demographic information may also be collected to further refine a product consultation. For example, a teenage demographic group may prefer different styles of makeup, hair care products, etc., than are preferred by older demographic groups. Additionally, the user can specify situations which might define suitable products for that user. For example, a user seeking makeup products which can be worn in an office or professional setting might not be interested in makeup products which are considered more suitable for evening or formal occasions.

In embodiments of the present invention, product recommendation system 220 may convey the product recommendation directly to subject 203 or another user via a voice message, a short message service (SMS) message, a multi-media message service (MMS) message, a voice extensible mark-up language (voice XML) message, an e-mail message, an instant message, or another form of communication.

In embodiments of the present invention, image capture device 201 may comprise personal property of end subject 203 such as a picture phone, a digital camera, a personal digital assistant (PDA), a personal computer system, a digital video recorder, or a similar device capable of capturing an image. However, embodiments of the present invention may also be used in proprietary systems in which a manufacturer provides a kiosk or other automated system for providing product consultation. In embodiments of the present invention, image capture device 201 may consist of multiple cameras, such as a stereo camera or camera array in which cameras are arranged in a fixed manner with respect to each other. In other embodiments, image capture device 201 may be used to provide multiple images of the subject captured from different viewing angles.

In embodiments of the present invention, network 206 comprises a dial-up Internet connection, a public switched telephone network (PSTN), a high-speed network connection (e.g., cable Internet, or high-speed computer network), or the like. Alternatively, image capture device 201 may utilize a cellular telephone connection, a satellite telephone connection, a radio connection, an infra-red communication connection, or the like. However, as will be discussed in greater detail below, embodiments of the present invention do not require that image 202 be conveyed to a separate system from image capture device 201.

It is appreciated that other configurations of system 200 may be utilized in embodiments of the present invention. For example, image analysis system 205 and product recommendation system 220 may be implemented as a single system, or may each be implemented as a network of communicatively coupled devices. In embodiments of the present invention, the functionality of image analysis system 205 or product recommendation system 220 may be performed by image capture device 201, thus providing a mobile handheld product recommendation system.

Embodiments of the present invention are advantageous in that they do not need a controlled infrastructure (e.g., calibrated and controlled cameras or ambient lighting conditions) when capturing image 202, or the consultation of a trained expert to generate a product recommendation. Previously, some cosmetics manufacturers controlled a dedicated room or kiosk in which the ambient lighting conditions and the camera processing parameters were carefully calibrated. This was necessary to facilitate making an accurate assessment of the skin coloration of the user. A picture of the user was taken and analyzed by a human consultant who then controlled a cosmetics consultation to the user. However, due to the expense and amount of space these facilities required, they were not generally made available to most users.

Embodiments of the present invention do not require a controlled infrastructure because image analysis system 205 utilizes the received image of imaged reference color set 204 to compensate for the ambient lighting conditions and image processing parameters of image capture system 201. As a result, embodiments of the present invention do not rely upon calibrated cameras or calibrated lighting when capturing an image of subject 203. By performing this analysis, image analysis system 205 can then determine what adjustments are necessary so that the spectral reflectance or color signal values of imaged reference color set 204 correspond with the known spectral reflectance or color signal values of the control reference color set 209. Product recommendation system 220 can thus generate a product recommendation based upon an accurate analysis of the subject's skin color. While the present invention recites that a controlled infrastructure is not required, embodiments of the present invention may be used with a controlled infrastructure as well.

Because there is no requirement for a controlled infrastructure, or a trained consultant, embodiments of the present invention facilitate providing product consultation in retail outlets which may not have the resources for providing a dedicated consultation counter. Thus, if subject 203 purchases cosmetics from a retailer that does not have personnel trained to perform cosmetics consultations, or does not have the space for the controlled infrastructure described above; subject 203 can still receive a cosmetics consultation using embodiments of the present invention. Because users may be more likely to buy cosmetics products from a manufacturer that provides cosmetics consultation, embodiments of the present invention are advantageous for cosmetics manufacturers who can suggest a whole range of related products and develop a relationship with subject 203 that is not possible when subject 203 is simply selecting from a shelf stocked with cosmetics products. Furthermore, users who might be uncomfortable receiving a cosmetics consultation from a total stranger could receive an anonymous cosmetics consultation using embodiments of the present invention. The product consultation may even be received by the users in the privacy of their own homes or other locations away from the retail outlets.

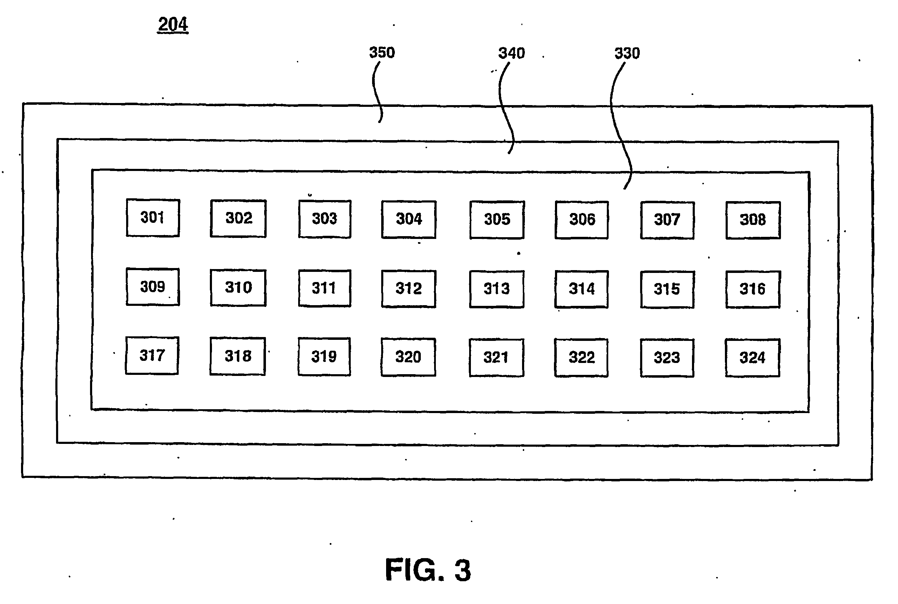

Figure 3 shows an exemplary imaged reference color set 204 used in embodiments of the present invention. It is noted that while the following discussion recites regions of imaged reference color set 204 comprising a color or colors, for the sake of clarity, these colors have been omitted from Figure 3. In embodiments of the present invention, imaged reference color set 204 is designed for robust automatic detection by image analysis system 205.

As shown in Figure 3, imaged reference color set 204 comprises a plurality of color patches (e.g., 301-324) which are arrayed in 3 rows of 8 color patches each. In embodiments of the present invention, color patches 301-324 are set against a black background 330 which is bounded by a white border 340 and a black border 350. In embodiments of the present invention, image analysis system 205 uses a detection algorithm to identify a pattern consistent to that produced by bounding black background 330 with white border 340. Black border 350 is used to facilitate identifying white border 340. It is noted that embodiments of the present invention are not limited to this type of pattern alone and that any detectable reference pattern arrangement may be used provided that image analysis system 205 can detect the pattern when it is present in image 202. For example, imaged reference color set 204 may comprise a checkerboard pattern, stripes, or background in which the colors represented by color patches 301-324 are embedded into wall paper, wall hangings, rugs, etc. Additionally, while Figure 3 shows a rectangular array, color patches 301-324 may be disposed in a circular pattern, a triangular pattern, a square pattern, etc. as well.

In the embodiment of Figure 3, color patches 301-308 comprise primary and secondary colors for general scene tone balancing and two shades of gray for white balancing. Color patches 309-324 comprise sixteen color patches representative of a range of human skin colors. In embodiments of the present invention, the color descriptions of control reference color set 208 are known to image analysis system 205 and are used to describe the reference or "true," color space, independent of lighting and image capture device characteristics, to which imaged reference color set 204 is compared. For example, in one embodiment, the spectral reflectances of each color patch (e.g., 301-324) is measured and then approximated as a 3-component standard red, green, blue (sRGB) encoded digital value. These encoded signal values are then compared with the corresponding 3-component signal values of imaged reference color set 204.

Figure 4A is a block diagram of an image analysis system 205 for providing product consulting in accordance with embodiments of the present invention. In embodiments of the present invention, image analysis system 205 comprises an input 404, a color correction determiner 401, a skin pixel selection component 402, a color correction applicator 405, and a skin color estimator 403. In the embodiment of Figure 4A, an image 202 is received by input 404 and sent to color correction determiner 401 and skin pixel selection component 402. Then, a color correction function 411 is output from color correction determiner 401 while skin pixel selection component 402 identifies at least one skin pixel (e.g., color value 412) from image 202 to which color correction function 411 will be applied by color correction applicator 405. As a result of applying the color correction function 411 to the color value 412 of the identified skin pixel(s), a modified color value 209 is output to skin color estimator 403 which generates a skin color estimate 413 based thereon. As described above, the step of determining a color correction function may precede, follow, or be performed substantially simultaneously to the step of locating a plurality of skin pixels from image 202.

In embodiments of the present invention, color correction determiner 401 performs an automatic detection of a target pattern (e.g., imaged reference color set 204). In an exemplary target detection sequence, a monochrome (e.g., a luminance only) version of the color image is filtered using, for example, a Laplacian filter. This determines the locus of maximal brightness change in the image (e.g., between the color patches 301-324 and background 330, or between white border 340 and black border 350). The locus of zero-crossing positions observed in the Laplacian output are then connected, where possible, into a set of closed contours. Each of the closed contours is then approximated by a sequence of linear segments, which may be determined through a successive bisection operation based on deviation of the contour from a straight line. "Rectangle candidates" are accepted for those contours whose piecewise linear segmentation (as described above) results in four major pieces whose relationships are consistent with the projection of a planar rectangle (i.e., opposing sides are consistent with being parallel and adjacent sides are consistent with being orthogonal) In one embodiment, a first contour "rectangle candidate" is located whose contrast is indicative of a darker exterior (e.g., black border 350) and lighter interior (e.g., white border 340). Then, a second contour "rectangle candidate" is located inside the first, whose contrast is indicative of a lighter exterior (e.g., white border 340) and a darker interior (e.g., black background 330).

In embodiments of the present invention, it is then determined if the above contour (e.g., the edge of black background 330) contains a set of "rectangle candidate" contours (e.g., color patches 301-324) whose contrasts are indicative of lighter interiors set inside a darker exterior. For example, each of color patches 301-324 are lighter than the black background 330 in which they are positioned. A determination is made of the transformation that maps the outer two "rectangle candidate" contours (e.g., black border 350 and white border 340) to true rectangles of correct aspect and relationship based upon the known values of these contours from the reference target description. In the present embodiment, it is then determined whether the interior contours (e.g., of color patches 301-324) are also of the correct aspect ratio and at consistent locations when transformed by the above transformation (based upon the known values of the contours of the color patches). It is noted that some of the color patches may have contrast values that inhibit their detection in a given image 202. However, in embodiments of the present invention, if a sufficient number of interior color patches are detected (e.g., a suitable measure of "sufficiency" might be 90%), then the reference target is accepted as being detected. In embodiments of the present invention, the color values inside the above-detected and validated color patches are sampled and used as the sample values for establishing the true-color transformation performed by image analysis system 205.

In embodiments of the present invention, color correction determiner 401 validates the imaged reference color set 204 upon detection to ensure the fidelity of color patches 301-324 in image 202. For example, if color patches 301-324 fade, or become discolored due to staining, the results of sampling the color patches by image analysis system 205 may become skewed. As a result, an incorrect estimation of the color correction function 411 by color correction determiner 401 may result. Thus, in embodiments of the present invention, color correction determiner 401 may validate the age or version of imaged reference color set 204. For example, imaged reference color set 204 may comprise a pattern (e.g., a bar-code), symbol, or character string (e.g., the date imaged reference color set 204 was printed) that is recognizable to image analysis system 205 and can be used to determine whether the imaged reference color set 204 is still valid. Alternatively, one or more of the inks used to create reference color set may be selected to fade after a given amount of time. As a result, portions of imaged reference color set 204 may become unrecognizable to color correction determiner 401, thereby preventing estimation of the color correction function and the true skin color from the received image 202. In another embodiment, fading of one or more of the inks may cause a message to be displayed which tells subject 202 that imaged reference color'set 204 has expired and that a new version will be needed to generate an accurate skin color estimate 413.

In embodiments of the present invention, upon determining that the imaged reference color set 204 is a valid copy, color correction determiner 401 then estimates the color correction function 411, also referred to as a "transform function", between the color space of image 202 and the control reference color set 208. In one embodiment of the present invention, a least-squares estimation is used to derive a color correction function F in the form of 3 x 4 matrix, that maps measured patch' mean colors M (e.g., from one or more of color patches 301-324) from imaged reference color set 204 to corresponding control color values R in control reference color set 208. The matrix F is effectively a 3 x 3 color transformation matrix plus an additive per-color-component offset. In embodiments of the present invention, prior to performing the least-squares estimation, patch mean colors with at least one saturated component are excluded, and the sRGB color component function is inverted for both M and R. However, while a 3 x 4 matrix may be used to determine the color correction function, embodiments of the present invention are not limited to linear algebra to determine this function. In other words, the color correction function can take any functional form.

In embodiments of the present invention, all of the color patches from imaged reference color set 204 may be measured and used to determine the color correction function 411. In another embodiment, the color patches may be selectively sampled. For example, in one embodiment, only the color patches (e.g., 301-308) of the primary, secondary, and monochrome colors (e.g., blue, green, red, cyan, magenta, yellow, and gray shades) are used to determine color correction function 411. Embodiments of the present invention may also sample white tones from white border 340 and black tones from background 330 or black border 350. In another embodiment, all of the skin colored patches (e.g., color patches 309-324) as well as black, white, and gray tones are sampled in order to determine color correction function 411. In another embodiment, only the skin colored patches (e.g., color patches 309-324) are sampled to determine color correction function 411. In embodiments of the present invention, it may be advantageous to only sample the skin colored patches (e.g., color patches 309-324) in order to determine a color correction 411 function best suited for estimating the skin color of subject 203. For example, sampling all of the imaged color patches from the imaged reference color set may result in a color correction function 411 that is best suited for correcting the colors of the overall image, but is not necessarily best suited for correcting the imaged skin color of subject 203. Thus, dense sampling of the color region of interest (e.g., skin tones) may be more important than a broad sampling of the overall color space when estimating a color correction function suitable for use in estimating the skin color of subject 203.

Thus, color correction determiner 401 determines a color correction function 411 which substantially eliminates discrepancies between the imaged reference color set 204 and the control reference color set 208. If we denote color correction function 411, in any functional form, as F, then this can be expressed by the equation:

$$I\_R = F(I\_C)$$

where I_R is a color in control reference color set 208 and I_C is a corresponding color from imaged reference color set 204. When applied to image 202, color correction function 411 attempts to accurately convey the colors of image 202 by compensating for the effects of ambient lighting conditions and the imaging characteristics of image capture device 201. More specifically, after color correction function 411 is applied to the skin pixels identified in image 202, the skin color of subject 203 can be determined without the distorting effects of ambient lighting conditions or the imaging characteristics of image capture device 201. It is noted that color correction 411 may only be approximate. For example, the color correction function F may not map each acquired image color from imaged reference color set 204 to its exact corresponding reference color in control reference color set 208. Furthermore, it is appreciated that F may lack the degree of precision necessary to cause an exact match to a reference color in control reference color set 208 when applied to the corresponding color in imaged reference color set 204. For the purposes of the present invention, the phrase "substantially eliminates" means that, after F has been applied to the color value 412 of the identified skin pixels of image 202 (e.g., or color descriptions thereof), the difference between the natural skin color of subject 203 (i.e. in the reference color space described by control reference color set 208) and the corrected skin color of subject 203, represented by modified color description 209, are not readily discernable.

In some embodiments of the present invention, color correction determiner 401 may use 3D shape information to determine color correction function 411. As described above, shape information may be supplied by image capture device 201, or it may be computed by color correction determiner 401 from multiple images supplied by image capture device 201. The shape information may be used, for example, to determine whether the portions of the imaged reference color set 204 are illuminated differently, so that computation of color correction function 411 may be based on only a subset of the image reference colors, or so that multiple color correction functions 411 may be estimated. The shape information might also be used to help estimate and remove shadowing of colors within imaged reference color set 204. Other uses of 3D shape information may be made by color correction determiner 401. Multiple images supplied by image capture device 201 may also aid color correction determination in ways other than ones based on 3D shape computation. For instance, the multiple images may allow sampling of imaged reference colors 204 that are not possible to view from a single camera, thereby increasing the amount of data to be fed to the color correction determination process. Also, the multiple views may enable averaging of lighting and image device characteristics across multiple viewing angles.

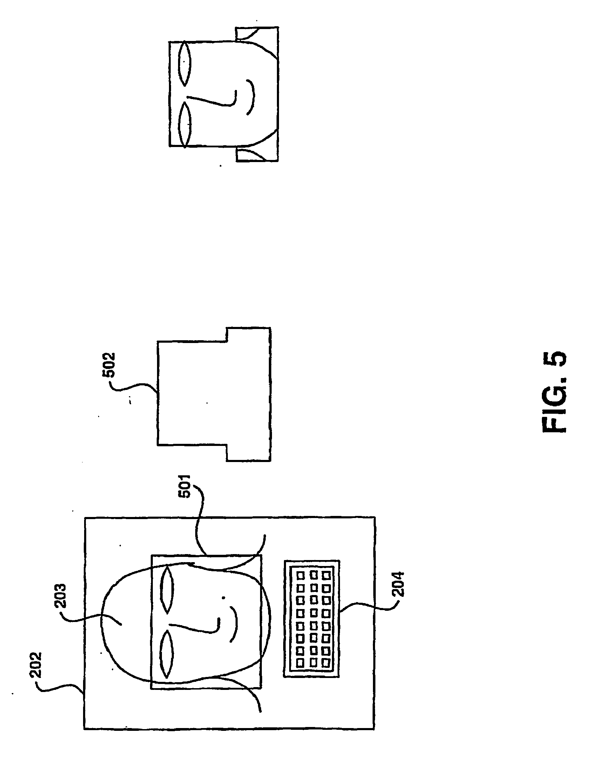

Figure 5 shows exemplary steps in selecting skin pixels in accordance with embodiments of the present invention. Skin pixel selection component 402 is for identifying pixels in image 202 that are likely to correspond to skin regions of subject 203 and particularly to those regions which are likely to be representative of the natural skin color of subject 203. As discussed above, some people's skin may be blemished, shiny, sun tanned/burnt, freckled, or in some manner discolored from that person's natural skin color. Furthermore, when image 202 is captured, the ambient lighting may cause shadows or highlighted areas which are not representative of that person's natural skin color. Additionally, regions of image 202 which show the hair or eyes of subject 203 should be eliminated from analysis by categorizer 205 when estimating the skin color of subject 203. In embodiments of the present invention, skin pixel selection component 402 divides the step of identifying likely skin pixel areas of image 202 into two parts: finding the face of subject 203, and sampling the face to find a region that is relatively unaffected by blemishes, shadow, or other coloration irregularities.

In embodiments of the present invention, skin pixel selection component 402 utilizes face pattern detection algorithms to identify likely regions of image 202 which comprise the face of subject 203. In many applications of the invention, it is likely that subject 203 will be the only, or the most prominent, face shown in image 202. Thus, embodiments of the present invention may perform face detection via a C++ implementation of the Viola-Jones face detector, applied at multiple (e.g. 24) resolutions, with lenient detection thresholds and, if necessary, image rotation. In embodiments of the present invention, if multiple regions are identified that are likely to be the face of subject 203 (e.g., multiple faces in image 202), skin pixel selection component 402 will select for further processing the largest region that has been identified as a likely face region. It is noted that embodiments of the present invention may also utilize skin color detection algorithms to further refine the identification of likely skin regions of subject 203: In embodiments of the present invention, the region of image 202 identified by the face detection algorithm is bounded by a face bounding box (e.g., 501 of Figure 5) imposed on the image 202.

In embodiments of the present invention, skin pixel selection component 402 applies a binary "face mask" template (e.g., 502 of Figure 5) within face bounding box 501. This is applied because the location of facial features within face bounding box 501 is typically not constant across all images 202. Thus, face bounding box 501 typically includes non-face background and non-face features of subject 203. As discussed above, ambient lighting and hair can also cause shadows to fall on any part of the face of subject 203, and skin texture is well known to produce large regions of specularities. Thus, in embodiments of the present invention, template 502 isolates skin regions that have a high probability of being representative of the natural skin color of subject 203, without requiring detailed parsing of the facial features and without segmentation of the face from the background.

As shown in Figure 5, template 502 excludes outer regions shown in face bounding box 501 such as the hair, and forehead of subject 203, as well as most of the background of image 202. However, template 502 is extended somewhat in the lower region to emphasize the sampling of skin pixels in the cheek regions of subject 203. In another embodiment, explicit detection of facial features such as the eyes, nose, and mouth of subject 203 is performed, followed by pixel selection of regions defined relative to these detected features. It is noted that the above description is only one way in which the face pixels of image 202 are detected and that there are a variety of other well known facial feature detection methods known in the art that may be utilized in accordance with embodiments of the present invention.

In embodiments of the present invention, the pixels remaining within template 502 are then sorted by luminance. It is noted that there are a variety of methods for computing luminance in accordance with embodiments of the present invention. In one embodiment, the luminance (Y) of a pixel may be computed using the following formula:

$$Y = R + G + B$$

where R, G, and B are the red, green, and blue component values of the pixel. Having computed the luminance of each pixel, skin pixel selection component 402 sorts the pixels in order of increasing luminance. Skin pixel selection component 402 then eliminates skin pixels that have a luminance below a lower threshold or above an upper threshold. This excludes high-end specularities (e.g., shiny skin) whose luminance typically falls above the upper luminance threshold. This also excludes pixels corresponding with the hair, nostrils, mouths, and shadowed portions of the subject's face which are typically associated with low luminance values that fall below the lower luminance threshold.

In one embodiment, the remaining pixels are clustered according to color in the control reference color set 208. Then, pixel clusters in probable skin color ranges are identified using a model of skin color that applies over a wide range of image capture and lighting conditions. In one embodiment, the largest cluster of skin color pixels is selected as being representative of the skin color of subject 203. In another embodiment, the cluster having the greatest pixel density (i.e. number of pixels per unit volume in color space) is selected. Again, it is noted that the identification of skin pixels within image 202 can be performed independently from the color correction estimation described above with reference to step 130 of Figure 1. Thus, in embodiments of the present invention, identification of skin pixels within image 202 may be performed prior to, subsequent to, or substantially simultaneously with the color correction estimation described above with reference to step 130 of Figure 1 and the discussion of Figure 4A.

In some embodiments of the present invention, 3D shape information is used to aid skin pixel selection component 402. The 3D shape information may be supplied by image capture device 201, or it may be computed, from multiple images supplied by capture device 201, by skin pixel selection component 402 or color correction determination component 401. The shape information may be used in identification of facial features such as nose or mouth, so that such regions may be preferentially excluded or included in skin pixel selection. The 3D shape information may also be used in estimation of shadowing on the face. Knowledge of shadowing can be used to exclude certain pixels from skin pixel selection, or it can be used to modify the skin pixel color descriptions. Multiple images supplied by image capture device 201 may also aid skin pixel selection in ways other than ones based on 3D shape computation. For instance, the multiple images may allow sampling of multiple skin regions that are not possible to view from a single camera, thereby increasing the amount of data to be fed to skin color estimation process. In addition, selection of skin regions from multiple images may allow for averaging of lighting and imaging device effects over multiple viewing angles.

In embodiments of the present invention, upon identifying skin pixels within image 202 that are most likely to represent the natural skin color of subject 203, at least one description of the color values of those pixels is constructed. In embodiments of the present invention, color descriptions of the identified skin pixels may comprise individual color values such as a three-component vector in an RGB space. In other embodiments of the present invention, aggregate color descriptions of the identified skin pixels may be used. Examples of aggregate color descriptions used in embodiments of the present invention may include, but are not limited to, the mean and co-variance of a multi-dimensional Gaussian function that fits a collection of individual color samples.

Another example may be the bounds of a range in some color space. In another embodiment, the aggregate color description may be considered a color "class" or a color "bin".

In the embodiment of Figure 4A, color correction applicator 405 receives color correction function 411 from color correction determiner 401 and the color values (e.g., 412) of the skin pixels selected by skin pixel selection component 402 as being representative of the skin color of subject 203. In one embodiment, color correction applicator 405 then applies color correction function 411 to the color values 412 and outputs modified color values 209 as a result. In another embodiment, the function of color correction applicator 405 may be performed immediately following the actions of color correction determiner 401, skin pixel selection component 402, or skin color estimator 403.

In embodiments of the present invention, modified color value 209 is accessed by skin color estimator 403, which then generates a skin color estimate 413 of subject 203 based upon an analysis of modified color value 209. As described above, in modified color value 209 the effects of ambient lighting and imaging characteristics of image capture device 201 which may have been existing at the time image 202 was captured have been substantially eliminated. In embodiments of the present invention, the skin color estimate 413 may comprise a single vector having the same dimension as reference colors in the control reference color set 208. In another embodiment, skin color estimate 413 may comprise a probability density function over the color space represented by control reference color set 208. In another embodiment, a variance or a probability of error is computed for each skin color estimate 413 generated by image analysis system 205. In another embodiment, an averaging of the skin pixel values, with optional weights, may result in a single skin color estimate 413. The optional weights may be determined in part by the likelihoods of individual skin pixels being located at good image sampling locations for skin, where these likelihoods are determined by skin pixel selection component 402. It is noted that skin color estimate 413 may not comprise a single skin color, but may refer to a class or range of skin colors.

METHOD AND SYSTEM FOR RECOMMENDING A PRODUCT BASED UPON SKIN COLOR

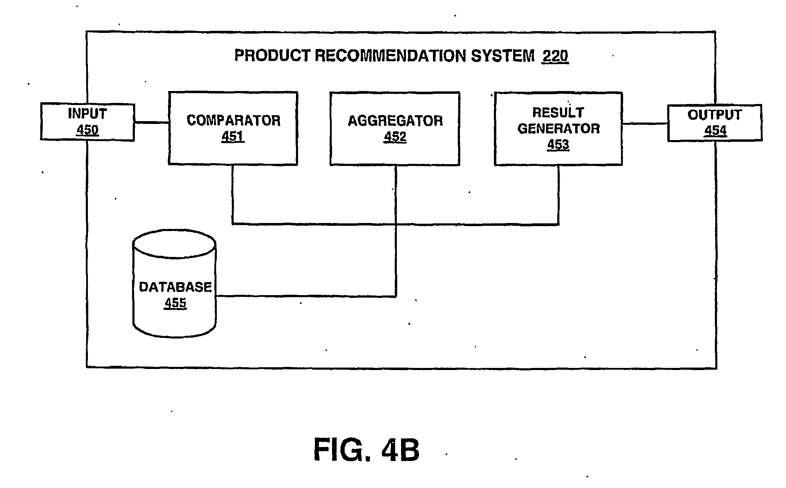

Figure 4B is a block diagram of a product recommendation system 220 in accordance with embodiments of the present invention. As described above with reference to Figures 1 and 2, product recommendation system 220 automatically generates a product recommendation based upon the subject's skin color estimate received from image analysis system 205. In the embodiment of Figure 4B, product recommendation system 220 comprises an input 450 coupled with a comparator 451, an aggregator 452, a result generator 453, a database 455 and an output 454. Skin color estimate 413 is accessed by comparator 451 via input 450 which compares skin color estimate 413 with at least one classification color (e.g., 221 of Figure 2). In embodiments of the present invention, the comparator 451 selects at least one classification color whose color description matches the color description of skin color estimate 413 within some tolerance. Based upon this selection, a correlation (e.g., stored in database 455) is accessed which correlates the selected classification color with at least one product. Result generator 453 then generates a recommendation of that product which is output by output 454. In embodiments of the present invention, output 454 may be communicatively coupled with network 206 or another communication network which conveys the product recommendations to the user of system 200. As described above, the user may be subject 203 or an operator of system 200.

In embodiments of the present invention, the classification color descriptions 221 accessed by comparator 451 may have a plurality of different meanings. In some embodiments, each classification color 221 is one of a plurality of colors which comprise, but are not limited to, a range of human skin colors. In some embodiments, each classification color 221 may represent a skin color estimate obtained in the past for subject 203 or for a different person. In other embodiments, estimates of the skin colors of a set of "training" subjects may be collected into groups to form the classification colors 221. In other words, measurements of the skin colors of a group of test subjects is followed by a clustering of those skin colors into groups or classes, each of which is a single classification color 221. In embodiments of the present invention, the skin color estimates of training subjects may be obtained using system 200. In other embodiments, the skin color of the training subjects may be manually specified, or measured using a spectrophotometer or another device. In still other embodiments, each classification color 221 may represent the color of a patch on a reference color chart, the color of a known object, or the mean of a pre-defined color range. In other embodiments of the present invention, the classification color may represent the color of a product that may be recommended by product recommendation system 220.

As described above with reference to Figure 2, binning is a process in which the spectrum of human complexion colors is divided into a set of discrete groups or "bins". Thus, each bin defines a subset of the spectrum of human complexion colors. In embodiments of the present invention, each bin may represent the skin color of an individual training subject, or an aggregate color description representing the range or distribution of skin colors of a group of training subjects. By aggregating data into groups prior to skin color comparison, embodiments of the present invention may reduce the influence of "outliers" and other irregularities in the training data that may skew the results of the comparison and thus cause poor recommendations to be made in some cases.

Additionally, in embodiments of the present invention, the skin color of each subject 203 who uses system 200 may be subsequently added to the group of training subjects as a classification color that aids in making a product recommendation for this same subject.203 or some other person. As described above, classification colors 221 may also represent colors of non-human objects such as clothing, cosmetic products, etc. In another embodiment, classification colors 221 may represent the color patches (e.g., 301-324) on a imaged reference color set 204, or another color reference pattern. However, in general it is not necessary for classification colors 221 to have any particular meaning. For example, they may be equally spaced colors in some color space such as sRGB or HSV.

In embodiments of the present invention, comparator 451 accesses a color description of skin color estimate 413 and of classification colors 221. In embodiments of the present invention, the color descriptions may comprise individual color values or aggregate color descriptions. An individual color value may be described as a representation of a single color, such as a three-component vector in a RGB (red-green-blue) color space. Aggregate color descriptions refer to ranges or distributions of color values in some color space. As an example, an aggregate color description may be the mean and co-variance of a multi-dimensional Gaussian function that describes a plurality of individual color samples. Another example of an aggregate color description is the bounds of a range in some color space. In embodiments of the present invention, an aggregate color description may be considered a class or bin.

In embodiments of the present invention, other data may be collected together and associated with each of the classification color descriptions. For example, aggregator 452 may form aggregate descriptions of classification colors 221 from individual color descriptions, based upon data associated with the individual color descriptions. In one embodiment, a grouping of individual skin color descriptions is performed to form aggregate classification colors 221, and this grouping is based upon labels assigned to subjects whose skin colors were estimated during a previous training phase. These labels may have been provided by an expert in skin assessment, by the training subjects themselves (e.g. via a questionnaire), or by any other means. In another embodiment, a grouping of individual skin colors is performed to form aggregate classification color descriptions 221, and this grouping is based upon individual skin colors sharing an associated product recommendation. That is, skin color descriptions of training subjects may be grouped into the same classification color 221 by aggregator 452 if those skin color descriptions were associated with the same product recommendation during a training phase. Additionally, in embodiments of the present invention, an association of a subject's skin color estimate with a product recommendation may be stored and used as a training step for product recommendation system 220. Thus, when a similar skin color estimate is subsequently accessed by input 450, the previous association stored during training can be used as an aid in determining a product recommendation.

In embodiments of the present invention, comparator 451 generates a "difference value" which describes the degree of similarity between the color description of skin color estimate 413 and a classification color 221. Many different comparison methods may be used in embodiments of the present invention, and the choice of method may depend in part upon whether the color descriptions of skin color estimate 413 and classification colors 221 are individual color values or aggregate color descriptions. Comparisons may be done even when the color description of skin color estimate 413 is an individual color value and the color description of a classification color 221 is an aggregate color description, or vice versa. For comparison between individual color values, a standard method for comparison of multivariate data may be employed, such as L1, L2, and infinity norms, and simple differencing (subtraction). For comparison between an individual color value and an aggregate color description of Gaussian form, the Mahalanobis distance is one suitable metric. To compare two aggregate color descriptions represented as probability distributions in some space, the Kullback-Leibler divergence is often an appropriate metric. To compare aggregate color descriptions represented as Gaussian distributions, the distance between the means may be used, optionally with scaling determined by the Gaussian variances. For aggregate descriptions represented as histograms, any of the histogram comparison methods commonly known in the art may be used.

In some embodiments of the present invention, a set of classification colors 221 may be considered descriptions of color "classes", and the color comparison step (e.g., 120 of Figure 1) is comprised of classification of skin color estimate 413 by at least one classifier (e.g., by comparator 451). In embodiments of the present invention, the "difference values" produced in this comparison step are decisions of class membership, or probabilities of class membership, or both, with respect to some set of color classes 221. A decision of class membership may be regarded as a specific case of class membership probability estimation, in which the estimated probability of class membership is always, for example, a 1 or 0 depending on whether the color (e.g., skin color estimate 413) is judged to be, or not be, respectively, a class member. Skin color estimate 413 may be judged by the same classifier (e.g., comparator 451) to be a member of multiple color classes 221, or it may be determined as not belonging to any of the classes. If skin color estimate 413 is judged to be a member of multiple color classes 221, additional information such as a probability estimation of class membership, or difference values corresponding to at least one of the color classes 221, may be substituted for or appended to the classification decision results.

In embodiments of the present invention, class memberships, and probabilities thereof, may be computed by multiple classifiers with respect to a single pre-defined set of color classes 221, or by multiple classifiers with respect to multiple sets of pre-defined color classes 221. A variety of classifier may be used in accordance with embodiments of the present invention including those commonly referred to in the mathematical and computer science arts as neural networks, support vector machines, linear discriminants, Gaussian models, decision trees, Multivariate Adaptive Regression Splines (MARS) classifiers, Classification and Regression Tree (CART) classifiers, and nearest-neighbor classifiers. In embodiments of the present invention, the classifiers may be constructed via standard training, or other methods, prior to use in classification.

In embodiments of the present invention, once a difference value or classification result are determined, at least one product recommendation is made automatically by product recommendation system 220. In embodiments of the present invention, other information may be accessed as well to determine which product should be recommended. For example, current fashion preferences and individual customer preferences, as well as the age,or ethnicity of subject 203 may affect the determination of which product is to be recommended.

The product recommendation process may be performed by a variety of methods, including ones well known in the arts of mathematics and computer science based on sets of rules. In one embodiment, the product recommendation is made by applying at least one classifier to at least one of the differences values (e.g., obtained in step 120 of Figure 1) between the classification colors 221 and skin color estimate 413. In another embodiment, a product recommendation associated with the classification color 221 having the smallest difference value from skin color estimate 413 is selected. In other embodiments, product recommendations are associated with the classification colors 221 and may be represented as numerical vectors in some space. The output product recommendation may then be the result of a pre-defined mathematical function applied to these vectors and the color difference values described above.

In one embodiment, training set product recommendations associated with classification colors similar to skin color estimate 413 are given higher weight in constructing the resulting product recommendation. For example, the difference values may be converted via a pre-defined function to numerical values or weights that are higher for lower difference values, and then scalar or vector numerical representations of the training set product recommendations are combined as a weighted sum using these weights. The sum is then divided by the total of the weights, with the recommendation corresponding to the resulting numerical value being used as the result product recommendation. An example of such a mathematical function may be described procedurally as follows:

Select the N classification colors 221 having the lowest N difference measures to skin color estimate 413,

Convert the N color difference measures into N class weights via a pre-defined function,

Compute frequencies, within each of the N classes, of product recommendations associated with individual training members of that class,

Convert the product recommendation frequencies within each of the N classes selected into "recommendation weights" via a pre-defined function,

Multiply the recommendation weights by the corresponding class weights to produce "final weights",

Compute a weighted sum over all the product recommendations associated with the N classes selected using the final weights;

Divide by the sum of the final weights to obtain a numerical representation of the product recommendation.

In other embodiments, other mathematical procedures or rules-based methods are applied to obtain the product recommendation using the difference measures between classification colors 221 and skin color estimate 413, the associated product recommendation statistics for each of the classification colors 221, or both.

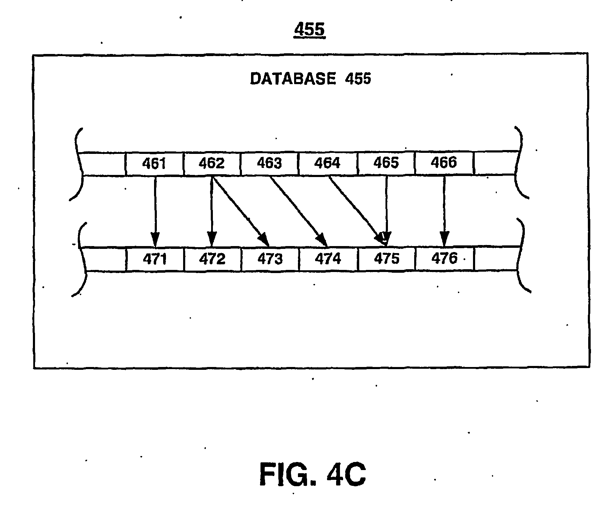

Figure 4C shows exemplary correlations between classification colors 221 and products in accordance with embodiments of the present invention. In embodiments of the present invention, correlations between classification colors, or color classes, and one or more products are stored in database 455. As shown in Figure 4C, a plurality of classification colors (e.g., 461, 462, 463, 464, 465, and 466) are correlated with corresponding products (e.g., 471, 472, 473, 474, 475, and 476). It is noted that there in not necessarily a one-to-one correspondence between a classification color and a particular product. That is, in some cases, a classification color (e.g., 462) may be associated with more than one product (e.g., 472 and 473). Similarly, a given product (e.g., 475) may be associated with more than one classification color (e.g., 464 and 465). It is appreciated that the association between a classification color and a product may be performed through training as described above, or may be established manually (e.g. through one person's judgment) in embodiments of the present invention. Similarly, it is noted that the classification colors (e.g., 461, 462, 463, 464, 465, and 466) may comprise individual color values or aggregate color values or they may encompass a range or distribution of color values, in accordance with embodiments of the present invention.

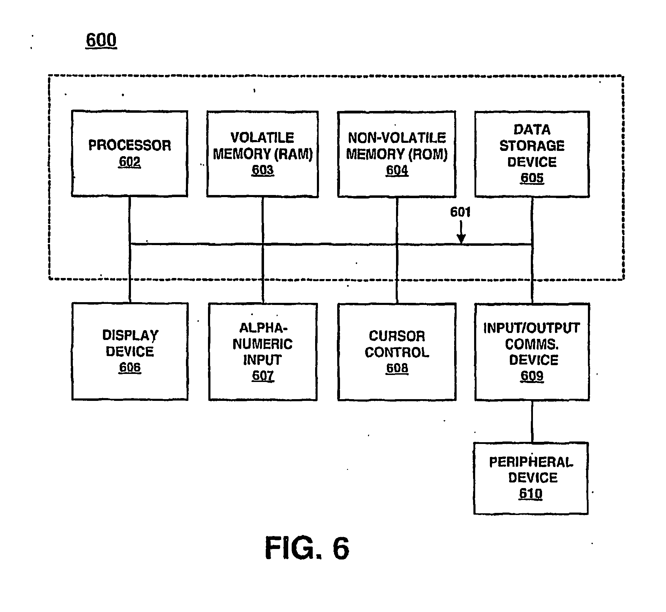

Figure 6 is a block diagram of an exemplary computer system 600 upon which embodiments of the present invention may be implemented. In embodiments of the present invention, portions of the present invention are comprised of computer-readable and computer-executable instructions that reside, for example, in computer system 600 which is used as a part of a general purpose computer network (not shown). It is appreciated that computer system 600 of Figure 6 is exemplary only and that the present invention can operate within a number of different computer systems including general-purpose computer systems, embedded computer systems, laptop computer systems, hand-held computer systems, and stand-alone computer systems.

In the present embodiment, computer system 600 includes an address/data bus 601 for conveying digital information between the various components, a central processor unit (CPU) 602 for processing the digital information and instructions, a volatile main memory 603 comprised of volatile random access memory (RAM) for storing the digital information and instructions, and a non-volatile read only memory (ROM) 604 for storing information and instructions of a more permanent nature. In addiction, computer system 600 may also include a data storage device 605 (e.g., a magnetic, optical, floppy, or tape drive or the like) for storing vast amounts of data. It should be noted that the software program for performing product consulting of the present invention can be stored either in volatile memory 603, data storage device 605, or in an external storage device (not shown).

Devices which are optionally coupled to computer system 600 include a display device 606 for displaying information to a computer user, an alpha-numeric input device 607 (e.g., a keyboard), and a cursor control device 608 (e.g., mouse, trackball, light pen, etc.) for inputting data, selections, updates, etc. Computer system 600 can also include a mechanism for emitting an audible signal (not shown).

Returning still to Figure 6, optional display device 606 of Figure 6 may be a liquid crystal device, cathode ray tube, or other display device suitable for creating graphic images and alpha-numeric characters recognizable to a user. Optional cursor control device 608 allows the computer user to dynamically signal the two dimensional movement of a visible symbol (cursor) on a display screen of display device 606. Many implementations of cursor control device 608 are known in the art including a trackball, mouse, touch pad, joystick, or special keys on alpha-numeric input 607 capable of signaling movement of a given direction or manner displacement. Alternatively, it will be appreciated that a cursor can be directed and activated via input from alpha-numeric input 607 using special keys and key sequence commands. Alternatively, the cursor may be directed and activated via input from a number of specially adapted cursor directing devices.

Furthermore, computer system 600 can include an input/output (I/O) signal unit (e.g., interface) 609 for interfacing with a peripheral device 610 (e.g., a computer network, modem, mass storage device, etc.). Accordingly, computer system 600 may be coupled in a network, such as a client/server environment, whereby a number of clients (e.g., personal computers, workstations, portable computers, minicomputers, terminals, etc.) are used to run processes for performing desired tasks. In particular, computer system 600 can be coupled in a system for recommending a product based upon skin color estimated from an image.

The preferred embodiment of the present invention, a method and system for recommending a product based upon skin color estimated from an image, is thus described. While the present invention has been described in particular embodiments, it should be appreciated that the present invention should not be construed as limited by such embodiments, but rather construed according to the following claims.

**Claims**

1. A computer implemented method for recommending a product based upon skin color estimated from an image, said method comprising:

    accessing a skin color estimate (413) generated from an image (202), comprising comparing an imaged reference color set (204) captured along with the image to a control reference color set for determining a color correction function compensating for a combined effect of ambient lighting conditions at the location at which the image is captured and the color transformation of a camera which captures the image;
    comparing said skin color estimate (413) with a classification color (461);
    accessing a correlation between said classification color (461) and at least one product (471): and
    recommending said at least one products (471) which correlates with said classification color (461).

2. The computer implemented method as recited in Claim 1 further comprising:

    processing said image (202) in a reference color space (208) wherein said skin color estimate (413) is independent of the ambient lighting and the color transformation of the image capture device (201) used to create said image (202).

3. The computer implemented method as recited in Claim 1 wherein said classification color (461) is representative of a human skin color.

4. The computer implemented method as recited in Claim 1 wherein said classification color (461) is representative of a product (471) selected from the group consisting essentially of:

    a cosmetics product, a clothing product, a hair care product, and a vision correction product.

5. The computer implemented method as recited in Claim 1 further comprising:

    producing a description of said skin color estimate (413) and a description of said classification color (461) which are selected from the group consisting essentially of a plurality of individual color values and an aggregate color description.

6. The computer implemented method as recited in Claim 1 further comprising:

    aggregating a plurality of said classification colors (461) which correspond with said at least one product (471) into a class.

7. The computer implemented method as recited in Claim 1 further comprising:

    aggregating a plurality of color descriptions to construct said classification color(461);
    generating an aggregate color description of said classification color (461); and
    comparing said aggregate color description with a description of said skin color estimate (413).

8. The computer implemented method as recited in Claim 1 further comprising:

    computing a plurality of difference values between said skin color estimate (413) and a corresponding plurality of classification colors (461);
    ordering said plurality of difference values; and
    recommending said at least one product (471) which is correlated with one of said plurality of classification colors (461) having the lowest of said plurality of difference values.

9. The computer implemented method as recited in Claim 8 wherein said recommending further comprises:

    generating a corresponding probability which describes a correlation between said skin color estimate (413) and said at least one product (471).

10. The computer implemented method as recited in Claim 1 wherein said classification color (461) is representative of said at least one product (471).

**Patentansprüche**

1. Ein computer-implementiertes Verfahren zum Empfehlen eines Erzeugnisses basierend auf Hautfarbe, die ausgehend von einem Bild geschätzt wird, wobei das Verfahren Folgendes umfasst:

Zugreifen auf eine Hautfarbeschätzung (413), die ausgehend von einem Bild (202) erzeugt wurde, umfassend das Vergleichen eines abgebildeten Referenzfarbsatzes (204), der zusammen mit dem Bild erfasst wurde, mit einem Kontrollreferenzfarbsatz zum Bestimmen einer Farbkorrekturfunktion, die einen kombinierten Effekt aus Umgebungsbeleuchtungsbedingungen an dem Ort, an dem das Bild erfasst wird, und der Farbtransformation einer Kamera, die das Bild erfasst, kompensiert;
Vergleichen der Hautfarbeschätzung (413) mit einer Klassifizierungsfarbe (461);
Zugreifen auf eine Korrelation zwischen der Klassifizierungsfarbe (461) und mindestens einem Erzeugnis (471); und
Empfehlen des mindestens einen Erzeugnisses (471), das mit der Klassifizierungsfarbe (461) korreliert.

2. Das computer-implementierte Verfahren nach Anspruch 1, ferner umfassend:

Verarbeiten des Bildes (202) in einem Referenzfarbraum (208), wobei die Hautfarbeschätzung (413) unabhängig von der Umgebungsbeleuchtung und der Farbtransformation der Bilderfassungsvorrichtung (201) ist, die für die Erzeugung des Bildes (202) verwendet wurde.

3. Das computer-implementierte Verfahren nach Anspruch 1, wobei die Klassifizierungsfarbe (461) repräsentativ für eine menschliche Hautfarbe ist.

4. Das computer-implementierte Verfahren nach Anspruch 1, wobei die Klassifizierungsfarbe (461) repräsentativ für ein Erzeugnis (471) ist, das aus der Gruppe ausgewählt ist, die im Wesentlichen aus Folgendem besteht:

einem Kosmetikerzeugnis, einem Bekleidungserzeugnis, einem Haarpflegeerzeugnis und einem Sehkraftkorrekturerzeugnis.

5. Das computer-implementierte Verfahren nach Anspruch 1, ferner umfassend:

Herstellen einer Beschreibung der Hautfarbeschätzung (413) und einer Beschreibung der Klassifizierungsfarbe (461), die aus der Gruppe ausgewählt sind, die im Wesentlichen aus einer Vielzahl von individuellen Farbwerten und einer Gesamt-Farbbeschreibung besteht.

6. Das computer-implementierte Verfahren nach Anspruch 1, ferner umfassend:

Anhäufen einer Vielzahl der Klassifizierungsfarben (461), die mit dem mindestens einen Erzeugnis (471) korrespondieren, in einer Klasse.

7. Das computer-implementierte Verfahren nach Anspruch 1, ferner umfassend:

Anhäufen einer Vielzahl von Farbbeschreibungen, um die Klassifizierungsfarbe (461) zu konstruieren;
Erzeugen einer Gesamt-Farbbeschreibung der Klassifizierungsfarbe (461); und
Vergleichen der Gesamt-Farbbeschreibung mit einer Beschreibung der Hautfarbeschätzung (413).

8. Das computer-implementierte Verfahren nach Anspruch 1, ferner umfassend:

Errechnen einer Vielzahl von Differenzwerten zwischen der Hautfarbeschätzung (413) und einer entsprechenden Vielzahl von Klassifizierungsfarben (461);
Ordnen der Vielzahl von Differenzwerten; und
Empfehlen des mindestens einen Erzeugnisses (471), das mit einer aus der Vielzahl von Klassifizierungsfarben (461) korreliert, die den geringsten aus der Vielzahl von Differenzwerten aufweist.

9. Das computer-implementierte Verfahren nach Anspruch 8, wobei das Empfehlen ferner Folgendes umfasst:

Erzeugen einer entsprechenden Wahrscheinlichkeit, die eine Korrelation zwischen der Hautfarbeschätzung (413) und dem mindestens einen Erzeugnis (471) beschreibt.

10. Das computer-implementierte Verfahren nach Anspruch 1, wobei die Klassifizierungsfarbe (461) repräsentativ für das mindestens eine Erzeugnis (471) ist.

**Revendications**

1. Procédé mis en oeuvre par ordinateur pour recommander un produit sur la base d'une couleur de peau estimée à partir d'une image, ledit procédé comprenant :

l'accès à une estimation de couleur de peau (413) générée à partir d'une image (202), comprenant la comparaison d'un ensemble de couleurs de référence imagées (204), capturé conjointement avec l'image, à un ensemble de couleurs de référence de contrôle, pour déterminer une fonction de correction de couleurs compensant un effet combiné de conditions d'éclairage ambiant à l'emplacement auquel l'image est capturée et de la transformation de couleurs d'un appareil photographique qui capture l'image ;

la comparaison de ladite estimation de couleur de peau (413) avec une couleur de classification (461) ;

l'accès à une corrélation entre ladite couleur de classification (461) et au moins un produit (471) ; et

la recommandation dudit ou desdits produits (471) qui sont en corrélation avec ladite couleur de classification (461).

2. Procédé mis en oeuvre par ordinateur selon la revendication 1, comprenant en outre :

le traitement de ladite image (202) dans un espace de couleur de référence (208) dans lequel ladite estimation de couleur de peau (413) est indépendante de l'éclairage ambiant et de la transformation de couleurs du dispositif de capture d'image (201) utilisé pour créer ladite image (202).

3. Procédé mis en oeuvre par ordinateur selon la revendication 1, dans lequel ladite couleur de classification (461) est représentative d'une couleur de peau d'être humain.

4. Procédé mis en oeuvre par ordinateur selon la revendication 1, dans lequel ladite couleur de classification (461) est représentative d'un produit (471) choisi dans le groupe constitué essentiellement par :

un produit cosmétique, un produit d'habillement, un produit de soins capillaires et un produit de correction de la vue.

5. Procédé mis en oeuvre par ordinateur selon la revendication 1, comprenant en outre :

la production d'une description de ladite estimation de couleur de peau (413) et d'une description de ladite couleur de classification (461) qui sont choisies dans le groupe constitué essentiellement par une pluralité de valeurs de couleur individuelles et d'une description de couleur agrégée.

6. Procédé mis en oeuvre par ordinateur selon la revendication 1, comprenant en outre :

l'agrégation d'une pluralité des couleurs de classification (461) qui correspondent audit ou auxdits produits (471) dans une classe.

7. Procédé mis en oeuvre par ordinateur selon la revendication 1, comprenant en outre :

l'agrégation d'une pluralité de descriptions de couleur pour construire ladite couleur de classification (461) ;

la génération d'une description de couleur agrégée de ladite couleur de classification (461) ; et

la comparaison de ladite description de couleur agrégée avec une description de ladite estimation de couleur de peau (413).

8. Procédé mis en oeuvre par ordinateur selon la revendication 1, comprenant en outre :

le calcul d'une pluralité de valeurs de différence entre ladite estimation de couleur de peau (413) et une pluralité correspondante de couleurs de classification (461) ;

le classement de ladite pluralité de valeurs de différence ; et

la recommandation dudit ou desdits produits (471) qui sont en corrélation avec l'une de ladite pluralité de couleurs de classification (461) ayant la plus petite valeur de différence parmi ladite pluralité de valeurs de différence.

9. Procédé mis en oeuvre par ordinateur selon la revendication 8, dans lequel ladite recommandation comprend en outre :

la génération d'une probabilité correspondante qui décrit une corrélation entre ladite estimation de couleur de peau (413) et ledit ou lesdits produits (471).

10. Procédé mis en oeuvre par ordinateur selon la revendication 1, dans lequel ladite couleur de classification (461) est représentative dudit ou desdits produits (471).

100

```
        ┌─────────────┐
        │    START    │
        └──────┬──────┘
               │
               ▼
┌──────────────────────────────────────────────┐
│  ACCESSING A SKIN COLOR ESTIMATE GENERATED FROM │
│                  AN IMAGE                       │
│                    110                          │
└──────────────────┬───────────────────────────┘
                   │
                   ▼
┌──────────────────────────────────────────────┐
│   COMPARING THE SKIN COLOR ESTIMATE WITH A      │
│            CLASSIFICATION COLOR                 │
│                    120                          │
└──────────────────┬───────────────────────────┘
                   │
                   ▼
┌──────────────────────────────────────────────┐
│ ACCESSING A CORRELATION BETWEEN THE CLASSIFICATION │
│      COLOR AND AT LEAST ONE PRODUCT             │
│                    130                          │
└──────────────────┬───────────────────────────┘
                   │
                   ▼
┌──────────────────────────────────────────────┐
│   RECOMMENDING THE AT LEAST ONE PRODUCT WHICH   │
│    CORRELATES WITH THE CLASSIFICATION COLOR     │
│                    140                          │
└──────────────────┬───────────────────────────┘
                   │
                   ▼
        ┌─────────────┐
        │     END     │
        └─────────────┘
```

# FIG. 1

**200**

IMAGE
202

SUBJECT
203

IMAGED
REFERENCE
COLOR SET
204

NETWORK
206

IMAGE
CAPTURE
DEVICE
201

IMAGE ANALYSIS SYSTEM 205

CONTROL
REFERENCE
COLOR SET
208

SKIN COLOR
ESTIMATE
413

PRODUCT RECOMMENDATION
SYSTEM 220

CLASSIFICATION
COLOR
221

FIG. 2

EP 2 131 697 B1

**FIG. 3**

FIG. 4A

EP 2 131 697 B1

FIG. 4B

**455**

DATABASE 455

| 461 | 462 | 463 | 464 | 465 | 466 |

| 471 | 472 | 473 | 474 | 475 | 476 |

# FIG. 4C

EP 2 131 697 B1

FIG. 5

EP 2 131 697 B1

**600**

| | | | |
|---|---|---|---|
| PROCESSOR 602 | VOLATILE MEMORY (RAM) 603 | NON-VOLATILE MEMORY (ROM) 604 | DATA STORAGE DEVICE 605 |

601

| | | | |
|---|---|---|---|
| DISPLAY DEVICE 606 | ALPHA-NUMERIC INPUT 607 | CURSOR CONTROL 608 | INPUT/OUTPUT COMMS. DEVICE 609 |

PERIPHERAL DEVICE 610

**FIG. 6**

EP 2 131 697 B1

**EP 2 131 697 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2006178904 A1
- US 5478238 A
- WO 0104839 A
- US 5313267 A